# EUROPEAN PATENT APPLICATION

(11) **EP 1 741 344 A2**
(43) Date of publication of application: **10.01.2007**
(21) Application number: 06021989.6
(22) Date of filing: 21.04.1995
(51) Int. Cl.: A23G 4/10

(54) **Chewing gum including a liquid sorbitol/mannitol/glycerin blend**

(30) Priority: 06.05.1994 US 239137
(62) Divisional of application: 95917095.2
(71) Applicant: WM. WRIGLEY JR. COMPANY, Chicago, Illinois 60611 (US)
(72) Inventor: Mazurek, Pamela M., Orland Park IL (US); Reed, Michael A., Merriville IN (US)
(74) Representative: Hayes, Adrian Chetwynd

(57) **Abstract**

A chewing gum composition comprising:
a water insoluble gum base;
a water soluble portion;
a syrup composed of a coevaporated sorbitol, mannitol, and glycerin solution that comprised prior to coevaporation from 52% to 72% by weight aqueous sorbitol; from 3% to 7% by weight mannitol, and from 25% to 45% by weight glycerin and a binding component composed of lycasin and glycerin.

## Description

### BACKGROUND OF THE INVENTION

This application is a continuation-in-part of U.S. Patent Application Serial No. 08/174,983, filed on December 29, 1993 and entitled "Liquid Sorbitol/Mannitol/Glycerin Blend and Compositions Containing Same."

The present invention relates generally to chewing gums. More specifically, the present invention relates to chewing gums including sorbitol.

It is known to provide alditols, such as sorbitol, mannitol, and xylitol in chewing gums. Alditols can be used in chewing gum, as well as other confectioneries and food products as a "sugar substitute." These sugar substitutes have the advantage that they are not fermented in the mouth of the consumer to form products that can attack dental enamel. Therefore, sorbitol, as well as other alditols, is used in sugarless products. Additionally, sorbitol can be used as a bulking agent.

A number of patents have disclosed and discussed the use of various compositions including sorbitol. These include U.S. Patent Nos.: 4,156,740; 4,252,829; 4,466,983; 4,614,654; 4,671,961; 4,728,515; 5,120,551; and 5,144,024.

Sorbitol can be provided in chewing gum in its crystalline form. It is believed that crystalline sorbitol currently accounts for approximately 50% of all sugar-free chewing gum formulations. Unfortunately, crystalline sorbitol is costly. Although it would be desirable to have a replacement for crystalline sorbitol, heretofore, such possible replacements were not as effective, created product stability problems, created processability issues, were ever more expensive than crystalline sorbitol, and/or could not be used with certain formulations.

In this regard, aqueous sorbitol has been explored for use in chewing gum. Aqueous sorbitol is a less expensive alternative than crystalline sorbitol. Unfortunately, the use of aqueous sorbitol in chewing gum at levels above 15% can create problems with respect to product stability. Likewise, the use of aqueous sorbitol at levels above 15% can also create processability problems. This is due, it is believed, to the water content contained in the aqueous sorbitol.

Additionally, there are problems with respect to at least certain chewing gum formulations when using liquid sorbitol. Because aqueous sorbitol contains 30% water, it is detrimental to moisture sensitive ingredients when provided at high levels in chewing gum. A further difficulty with aqueous sorbitol is that it readily crystallizes and causes the gum to become brittle.

There is therefore a need for an improved method and/or sorbitol product that allows sorbitol to be added to a chewing gum formulation in a non-crystalline state.

### SUMMARY OF THE INVENTION

The present invention provides an improved chewing gum composition. More specifically, the present invention provides a chewing gum composition that includes an aqueous sorbitol/mannitol/glycerin syrup. Additionally, the present invention also provides other products such as food stuffs, beverages, medicaments, and confectioneries that include an aqueous sorbitol/mannitol/glycerin syrup. Pursuant to the present invention, the sorbitol/mannitol/glycerin syrup can be used in formulations that contain levels of liquid sorbitol solution that were heretofore not possible.

To this end, in an embodiment, a chewing gum formulation is provided that is created using, in part, a syrup that includes, on a dry weight basis, not including any water that may be present: approximately 40 to about 70% by weight sorbitol; approximately 24 to about 56% by weight glycerin; and approximately 4 to about 9% by weight mannitol.

Pursuant to another embodiment of the present invention, a chewing gum formulation is provided comprising a water insoluble gum base, a water soluble portion and sorbitol, the sorbitol being present at least initially, in the formulation as a syrup of aqueous sorbitol and comprising approximately 25% to about 45% by weight of the formulation.

In another embodiment, the present invention provides a chewing gum that is created by providing a liquid sorbitol, mannitol, and glycerin syrup; and adding the syrup to other components to create a chewing gum formulation.

If desired, the chewing gum formulation also includes a crystalline form of sorbitol.

In a further embodiment, an aqueous solution of sorbitol, mannitol, and glycerin is coevaporated to create the syrup. Preferably, the syrup is evaporated so that it contains not more than 10% water. The solution can comprise prior to the coevaporation process: approximately 52 to about 72% aqueous sorbitol; approximately 3 to about 7% mannitol; and approximately 25 to about 45% glycerin.

In another embodiment, sucrose is hydrolyzed to dextrose and fructose. The dextrose and fructose are then hydrogenated to sorbitol and mannitol. This will provide a syrup containing sorbitol and mannitol. Glycerin can then be added and the whole mixture can be coevaporated to drive off the water that is present.

In a further embodiment, a method for creating a sugarless chewing gum is provided comprising the steps of: providing a solution of aqueous sorbitol, mannitol, and glycerin; coevaporating the solution to create a syrup; and adding the syrup to other chewing gum components to create a chewing gum formulation.

An advantage of the present invention is that it provides an improved chewing gum formulation.

Moreover, an advantage of the present invention is that it provides an improved sugarless chewing gum formulation.

Furthermore, an advantage of the present invention is that it provides an improved method for creating chewing gum.

Further, an advantage of the present invention is that it provides a method for adding sorbitol to chewing gum in a state other than a crystalline state.

Still further, an advantage of the present invention is that it provides a more cost effective method of adding sorbitol to a chewing gum composition.

Another advantage of the present invention is that it allows greater levels of sorbitol to be added to chewing gum in a non-crystalline form than heretofore practical from a commercial standpoint.

Additional features and advantages of the present invention are described in, and will be apparent from, the detailed description of the presently preferred embodiments.

### DETAILED DESCRIPTION

### OF THE PRESENTLY PREFERRED EMBODIMENTS

The present invention provides an improved chewing gum formulation and method of making chewing gum. Pursuant to the present invention, sorbitol is provided in a non-crystalline state at levels that the inventors believe were not heretofore commercially possible utilizing liquid sorbitol in chewing gum formulations.

Sorbitol is a sugarless sweetener that is added to a variety of products. These products include food stuffs, beverages, medicaments, confectioneries, and chewing gum. Sorbitol can be added either alone, without other sugarless sweeteners, for example, in sugar-free chewing gum, or in combination with sugar sweeteners. Additionally, the sorbitol can be provided in, for example, the chewing gum entirely in the syrup form of the present invention or along with a crystalline form of sorbitol.

Pursuant to the present invention, the sorbitol is added to other components of a chewing gum formulation, as a blend of aqueous sorbitol, mannitol, and glycerin. The blend of aqueous sorbitol, mannitol, and glycerin is provided as a syrup. To this end, a blend of aqueous sorbitol and crystallization modifiers is provided. This blend can be used to reduce the usage of crystalline sorbitol in standard product formulations. It has been found that the resultant product, including the sorbitol composition of the present invention, exhibits increased binding capacity over currently used binders in sugar-free gum.

Preferably, the syrup includes on a dry weight basis not including any water that may be present: approximately 40 to about 70% sorbitol; approximately 24 to about 56% glycerin; and approximately 4 to about 9% mannitol. In a preferred embodiment, the syrup includes on a dry weight basis not including water that may be present: approximately 47 to about 65% sorbitol; approximately 28 to about 45% glycerin; and approximately 5 to about 7% mannitol. Prior to any evaporation of the syrup, the syrup will contain approximately 20% water. If desired, the syrup can be used in this form. However, it is envisioned that at least some of the water will be driven off through evaporation or other means.

In an embodiment, to provide the aqueous sorbitol of the present invention, aqueous sorbitol, mannitol, and glycerin are added together and then coevaporated to create a syrup. Preferably, the aqueous sorbitol, mannitol, and glycerin combination is evaporated so that it contains not more than 10% water. Most preferably, the aqueous sorbitol, glycerin, and mannitol is evaporated so that it contains no more than 7% water.

In another embodiment, the syrup blend is made by hydrolyzing sucrose to dextrose and fructose. The dextrose and fructose are then hydrogenated to sorbitol and mannitol. The result will be a syrup containing sorbitol and mannitol. Glycerin can be added and the whole mixture can be coevaporated to drive off the water.

The aqueous sorbitol, glycerin, and mannitol can be provided in different combinations and ratios. In this regard, preferably prior to evaporation: the aqueous sorbitol comprises approximately 52 to about 72% by weight of the combination; mannitol comprises approximately 3 to about 7% by weight of the combination; and glycerin comprises approximately 25 to about 45% by weight of the combination. In a most preferred embodiment, prior to evaporation: the aqueous sorbitol comprises approximately 60 to 70% by weight of the combination; mannitol comprises approximately 5 to 6% by weight of the combination; and glycerin comprises approximately 25 to 35% by weight of the combination. In an embodiment that has been found to function satisfactorily, prior to evaporation the aqueous sorbitol comprises approximately 65% of the combination, glycerin approximately 30%, and mannitol approximately 5%. The syrup will include on a dry weight basis not including the water present 56.5% sorbitol, 37.3% glycerin, and 6.2% mannitol.

Pursuant to the present invention, the aqueous sorbitol syrup can be used to create sugarless chewing gums; because sugarless chewing gum typically contains sorbitol. However, it should be noted that the present invention can be used to create any chewing gum that includes sorbitol. Likewise, aqueous sorbitol syrup can be used in any product that uses sorbitol. Such products include confectioneries, medicaments, beverages, and food products.

Chewing gum generally consists of a water insoluble gum base, a water soluble portion, and flavors. The water soluble portion dissipates with a portion of the flavor over a period of time during chewing. The gum base portion is retained in the mouth throughout the chew.

The insoluble gum base generally comprises elastomers, resins, fats and oils, softeners, and inorganic fillers. The gum base may or may not include wax. The insoluble gum base can constitute approximately 5 to about 95 percent, by weight, of the chewing gum, more commonly, the gum base comprises 10 to about 50 percent of the gum, and in some preferred embodiments, 20 to about 35 percent, by weight, of the chewing gum.

In an embodiment, the chewing gum base of the present invention contains about 20 to about 60 weight percent synthetic elastomer, 0 to about 30 weight percent natural elastomer, about 5 to about 55 weight percent elastomer plasticizer, about 4 to about 35 weight percent filler, about 5 to about 35 weight percent softener, and optional minor amounts (about one percent or less) of miscellaneous ingredients such as colorants, antioxidants, etc.

Synthetic elastomers may include, but are not limited to, polyisobutylene with a GPC weight average molecular weight of about 10,000 to about 95,000, isobutylene-isoprene copolymer (butyl elastomer), styrene-butadiene copolymers having styrene-butadiene ratios of about 1:3 to about 3:1, polyvinyl acetate having a GPC weight average molecular weight of about 2,000 to about 90,000, polyisoprene, polyethylene, vinyl acetate-vinyl laurate copolymer having vinyl laurate content of about 5 to about 50 percent by weight of the copolymer, and combinations thereof.

Preferred ranges are, for polyisobutylene, 50,000 to 80,000 GPC weight average molecular weight, for styrene-butadiene, 1:1 to 1:3 bound styrene-butadiene, for polyvinyl acetate, 10,000 to 65,000 GPC weight average molecular weight with the higher molecular weight polyvinyl acetates typically used in bubble gum base, and for vinyl acetate-vinyl laurate, vinyl laurate content of 10-45 percent.

Natural elastomers may include natural rubber such as smoked or liquid latex and guayule as well as natural gums such as jelutong, lechi caspi, perillo, sorva, massaranduba balata, massaranduba chocolate, nispero, rosindinha, chicle, gutta hang kang, and combinations thereof. The preferred synthetic elastomer and natural elastomer concentrations vary depending on whether the chewing gum in which the base is used is adhesive or conventional, bubble gum or regular gum, as discussed below. Preferred natural elastomers include jelutong, chicle, sorva and massaranduba balata.

Elastomer plasticizers may include, but are not limited to, natural rosin esters such as glycerol esters of partially hydrogenated rosin, glycerol esters polymerized rosin, glycerol esters of partially dimerized rosin, glycerol esters of rosin, pentaerythritol esters of partially hydrogenated rosin, methyl and partially hydrogenated methyl esters of rosin, pentaerythritol esters of rosin; synthetics such as terpene resins derived from alpha-pinene, beta-pinene, and/or d-limonene; and any suitable combinations of the foregoing. the preferred elastomer plasticizers will also vary depending on the specific application, and on the type of elastomer which is used.

Fillers/texturizers may include magnesium and calcium carbonate, ground limestone, silicate types such as magnesium and aluminum silicate, clay, alumina, talc, titanium oxide, mono-, di- and tri-calcium phosphate, cellulose polymers, such as wood, and combinations thereof.

Softeners/emulsifiers may include tallow, hydrogenated tallow, hydrogenated and partially hydrogenated vegetable oils, cocoa butter, glycerol monostearate, glycerol triacetate, lecithin, mono-, di-and triglycerides, acetylated monoglycerides, fatty acids (e.g. stearic, palmitic, oleic and linoleic acids), and combinations thereof.

Colorants and whiteners may include FD&C-type dyes and lakes, fruit and vegetable extracts, titanium dioxide, and combinations thereof.

The base may or may not include wax. An example of a wax-free gum base is disclosed in U.S. Serial No. 07/906,921, the disclosure of which is incorporated herein by reference.

In addition to a water insoluble gum base portion, a typical chewing gum composition includes a water soluble bulk portion and one or more flavoring agents. The water soluble portion can include bulk sweeteners, high intensity sweeteners, flavoring agents, softeners, emulsifiers, colors, acidulants, fillers, antioxidants, and other components that provide desired attributes.

softeners are added to the chewing gum in order to optimize the chewability and mouth feel of the gum. The softeners, which are also known as plasticizers and plasticizing agents, generally constitute between approximately 0.5 to about 15% by weight of the chewing gum. The softeners may include glycerin, lecithin, and combinations thereof. Aqueous sweetener solutions such as those containing sorbitol, hydrogenated starch hydrolysates, corn syrup and combinations thereof, may also be used as softeners and binding agents in chewing gum. Additionally, the sorbitol/mannitol/glycerin syrup of the present invention can be used as a softener and binding agent.

Bulk sweeteners include both sugar and sugarless components. Bulk sweeteners typically constitute 5 to about 95% by weight of the chewing gum, more typically, 20 to 80% by weight, and more commonly, 30 to 60% by weight of the gum.

Sugar sweeteners generally include saccharide-containing components commonly known in the chewing gum art, including, but not limited to, sucrose, dextrose, maltose, dextrin, dried invert sugar, fructose, levulose, galactose, corn syrup solids, and the like, alone or in combination.

Sorbitol can be used as a sugarless sweetener. Preferably, the sorbitol syrup of the present invention comprises approximately 25% to about 45% by weight of the chewing gum composition. As noted above, in addition to the sorbitol syrup of the present invention, crystalline sorbitol, if desired, can also be used. Additionally, sugarless sweeteners can include, but are not limited to, other sugar alcohols such as mannitol, xylitol, hydrogenated starch hydrolysates, maltitol, and the like, alone or in combination.

High intensity artificial sweeteners can also be used in combination with the above. Preferred sweeteners include, but are not limited to sucralose, aspartame, salts of acesulfame, alitame, saccharin and its salts, cyclamic acid and its salts, glycyrrhizin, dihydrochalcones, thaumatin, monellin, and the like, alone or in combination. In order to provide longer lasting sweetness and flavor perception, it may be desirable to encapsulate or otherwise control the release of at least a portion of the artificial sweetener. Such techniques as wet granulation, wax granulation, spray drying, spray chilling, fluid bed coating, coacervation, and fiber extension may be used to achieve the desired release characteristics.

Usage level of the artificial sweetener will vary greatly and will depend on such factors as potency of the sweetener, rate of release, desired sweetness of the product, level and type of flavor used and cost considerations. Thus, the active level of artificial sweetener may vary from 0.02 to about 8%. When carriers used for encapsulation are included, the usage level of the encapsulated sweetener will be proportionately higher.

Combinations of sugar and/or sugarless sweeteners may be used in chewing gum. Additionally, the softener may also provide additional sweetness such as with aqueous sugar or alditol solutions.

If a low calorie gum is desired, a low caloric bulking agent can be used. Example of low caloric bulking agents include: polydextrose; Raftilose, Raftilin; Fructooligosaccharides (NutraFlora); Palatinose oligosaccharide; Guar Gum Hydrolysate (Sun Fiber); or indigestible dextrin (Fibersol). However, other low calorie bulking agents can be used.

A variety of flavoring agents can be used. The flavor can be used in amounts of approximately 0.1 to about 15 weight percent of the gum, and preferably, about 0.2 to about 5%. Flavoring agents may include essential oils, synthetic flavors or mixtures thereof including, but not limited to, oils derived from plants and fruits such as citrus oils, fruit essences, peppermint oil, spearmint oil, other mint oils, clove oil, oil of wintergreen, anise and the like. Artificial flavoring agents and components may also be used. Natural and artificial flavoring agents may be combined in any sensorially acceptable fashion.

By way of example and not limitation, examples of chewing gum formulations constructed pursuant to the present invention are as follows:

**TABLE 1**

| | Ex. 1 | Ex. 2 | Ex. 3 | Ex. 4 |
|---|---|---|---|---|
| Sugarless Syrup Blend* | 40 | 35 | 30 | 25 |
| Crystalline Sorbitol | 8.6 | 13.6 | 18.6 | 23.6 |
| Glycerin | 9.88 | 9.88 | 9.88 | 9.88 |
| Gum Base | 23.2 | 23.2 | 23.2 | 23.2 |
| Mannitol | 4.77 | 4.77 | 4.77 | 4.77 |
| Tal | 2.0 | 2.0 | 2.0 | 2.0 |
| Flavor | 1.65 | 1.65 | 1.65 | 1.65 |
| Encapsulated Aspartame | 0.34 | 0.34 | 0.34 | 0.34 |
| Spray Dried Peppermint Flavor | 0.25 | 0.25 | 0.25 | 0.25 |
| Coevaporated Lycasln/Glycerin | 9.31 | 9.31 | 9.31 | 9.31 |

| | | | | |
|---|---|---|---|---|
| * created by evaporating a mixture of 65% liquid sorbitol. 30% glycerin, and 5% mannitol to 98% solids. | | | | |

The present invention, it is believed, can be used with a variety of processes for manufacturing chewing gum.

Chewing gum is generally manufactured by sequentially adding the various chewing gum ingredients to commercially available mixers known in the art. After the ingredients have been thoroughly mixed, the chewing gum mass is discharged from the mixer and shaped into the desired form, such as by rolling into sheets and cutting into sticks, extruding into chunks, or casting into pellets.

Generally, the ingredients are mixed by first melting the gum base and adding it to the running mixer. The gum base may alternatively be melted in the mixer. Color and emulsifiers can be added at this time.

The sorbitol syrup of the present invention can be added next along with any other syrup softeners or bulking agents and part of the bulk portion. Further, parts of the bulk portion may then be added to the mixer. Flavoring agents are typically added with the final part of the bulk portion. The entire mixing process typically takes from 5 to 15 minutes, although longer mixing times are sometimes required. Those skilled in the art will recognize that variations of this general mixing procedure, or other mixing procedures, can be followed.

By way of example, and not limitation, further examples of the present invention will now be set forth.

### EXAMPLES 5-10

A sorbitol mixture was created by placing a ratio of 65% aqueous sorbitol, 30% glycerin, and 5% mannitol in a suitable container. The mixture was evaporated to an RI (20°F) of 1.498 (approximately only 7% water) . The syrup was then placed in formulas Ex. 6 - Ex. 10 set forth in Table 2 below (Ex. 5 is a reference formula).

**TABLE 2**

| | Ex. 5 | Ex. 6 | Ex. 7 | Ex. 8 | Ex. 9 | Ex. 10 |
|---|---|---|---|---|---|---|
| Crystalline Sorbitol | 49.17 | 27.56 | 32.56 | 35.56 | 36.65 | 41.79 |
| Gum Base | 23.2 | 23.2 | 23.2 | 23.2 | 23.2 | 23.2 |
| Sugarless Syrup Bland* | - | 45.0 | 40.0 | 35.0 | 30.0 | 25.0 |
| Coevaporated Lyeasin/Glycerin | 9.31 | - | - | - | - | - |
| Glycerin | 9.31 | - | - | - | 2.64 | 2.7 |
| Mannitol | 4.77 | - | - | 2.0 | 3.27 | 3.07 |
| Peppermint Flavor | 1.65 | 1.65 | 1.65 | 1.65 | 1.65 | 1.65 |
| Encapsulated Aspartame | 0.34 | 0.34 | 0.34 | 0.34 | 0.34 | 0.34 |
| Spray Dried Peppermint Flavor | 0.25 | 0.25 | 0.25 | 0.25 | 0.25 | 0.25 |
| Talc | 2.0 | 2.0 | 2.0 | 2.0 | 2.0 | 2.0 |

| | | | | | | |
|---|---|---|---|---|---|---|
| *Created by evaporating a mixture of 65% liquid sorbitol. 30% glycerin,and 5% mannitol to 98% solids. | | | | | | |

A reduction of 55% crystalline sorbitol was achieved by using the present invention. In this regard, 45% of the necessary sorbitol is provided by the syrup of the present invention and a satisfactory chewing gum is still achieved. Additionally, it was noted in chewing the gum formulas that used the sorbitol syrup of the present invention (Exs. 6-10) that an increase in binding capacity was achieved as compared to a current chewing gum binder lycasin/glycerin (Ex. 5).

As previously noted, the sorbitol syrup can be used to create other products aside from chewing gum. By way of example, and not limitation, such other products may have the following formulas.

### EXAMPLES 11-16

A sorbitol, mannitol, and glycerin syrup containing only 2% water (hereinafter "98% sorbitol syrup") may be used in a sugarless, non-cariogenic hard candy as shown in the following formulas:

### Example 11

Fruit flavored hard candy:

| | % |
|---|---|
| Xylitol | 15.8 |
| Sorbitol | 34.8 |
| 98% Sorbitol Syrup | 38.0 |
| Water | 11.0 |
| Citric Acid | 0.3 |
| Artificial Sweetener/ | |
| Fruit Flavor/Color | as needed |

### Example 12

Butterscotch Hard Candy:

| | % |
|---|---|
| 98% Sorbitol Syrup | 53.6 |
| Sorbitol | 26.4 |
| Water | 17.66 |
| Butter | 2.06 |
| Salt | 0.12 |
| Natural and Artificial Flavor | 0.16 |

### Example 13

### Hard Candy:

| | % |
|---|---|
| Sorbitol | 30.0 |
| 98% Sorbitol Syrup | 60.0 |
| Xylitol | 9.35 |
| Aspartame | 0.35 |
| Salt | 0.12 |
| Citric Acid/Flavor/Color | as needed |

Procedure: Hard candies can be made by the following procedure:
1. In a stainless steel, steam jacketed kettle, the 98% sorbitol syrup, xylitol, water, sorbitol, and salt are added and the mixture is heated to form a thick syrup.
2. The syrup is cooked and mixed until a temperature of about 300°F and a moisture level of about 1-2% is obtained.
3. The heavy syrup is poured onto a stainless steel cooling table.
4. Citric acid, artificial ingredients, flavors and color, and butter are added and mixed by kneading.
5. The resultant product is allowed to cool to room temperature and cut as needed.

### Example 14 (sugarless taffy)

98% sorbitol syrup may be used to prepare a sugar-free taffy by the following formula and procedure:

### Formula:

| | % As is | % DSB | 20# (9.072Ka) Batch |
|---|---|---|---|
| 98% Sorbitol Syrup | 94.5 | 92.7 | 18.9 (8.573 Kg) |
| 110°F. M.P. Vegetable Oil | 5.25 | 7.0 | 1.0 (0.476 Kg) |
| Lecithin | 0.25 | 0.3 | 0.3 (0.136 Kg) |
| Flavor/Color/Acid/ Sweetener | As needed | | |

Procedure:
1. Weigh 98% sorbitol syrup into an atmospheric cooker, such as a Savage open fire cooker, and cook to about 255°F (123.9°C). No agitation is required for this step.
2. Allow the cooked 98% sorbitol syrup to cool to about 230°F and add fat and lecithin; fat does not have to be premelted. Mix until uniform.
3. Pour mass on oiled cooling table. Side bars may be necessary for initial cooling if table is small.
4. Work in color, flavor and acid on the slab before pulling (color and flavor may also be added on puller). Cool to plastic texture.
5. Pull cooked mass until desired texture is attained. Cut and wrap in moisture resistant packaging.

### Example 15 (sugar-free caramel)

98% sorbitol syrup may be used to prepare a sugar-free caramel by the following formula and procedure:

| | |
|---|---|
| 98% Sorbitol syrup | 58.53% |
| Evaporated milk | 33.24 |
| Coconut Oil, 92°F (33°C) | 7.68 |
| Lecithin | 0.20 |
| Salt | 0.20 |
| Aspartame | 0.11 |
| Vanillin | 0.04 |
| Total | 100.00% |

### Procedure:

1. Prepare aspartame slurry by mixing 1/3 ratio of aspartame to coconut oil in a high shear blender for about 30 seconds.
2. Premix all ingredients, except aspartame slurry, half of the evaporated milk and the vanillin, for 5 minutes at about 120°F (48.9°C).
3. Bring premix to a boil and slowly add the balance of the evaporated milk, maintaining the boil.
4. Cook to the desired texture. Final cook temperature will vary according to the cooking process. A suggested final cook temperature is about 245°F (118.3°C).
5. Cool the caramel to about 220°F (104°C) and add the aspartame slurry slowly with mixing. The vanillin should also be added at this time.
6. Slab, cut and wrap as desired.

### Example 16 (sugarless gum drops)

| | % |
|---|---|
| Gelatin 200 bloom type B | 7.0 |
| Crystalline sorbitol | 34.9 |
| 98% Sorbitol Syrup | 32.6 |
| Hot Water (80-90°C) | 14.0 |
| Water | 10.0 |
| Citric Acid Solution | 1.5 |
| Fruit Flavor/Color | as needed |

Procedure:
1. Dissolve gelatin directly in hot water.
2. Cook the 98% sorbitol syrup, sorbitol and water at 115°C, and add gelatin solution.
3. Stir slowly in order to obtain a smooth homogenous mixture.
4. Remove air bubbles with deaeration equipment or other available means.
5. Add citric acid solution, flavor and color.
6. Deposit in cool and dry starch, and sprinkle a little starch onto the articles.
   Temperature: 70°C. Total solids when depositing: 78°C Brix.
7. Store the starch tray at room temperature for 24 hours.
8. After removal from the molding starch, oil the articles or same with mannitol.

Other food items in which 98% sorbitol syrup may be used as a non-cariogenic bulking agent are:
1. Confections and frostings.
2. Dressings for salads.
3. Frozen dairy deserts and mixes.
4. Gelatins, puddings and fillings.
5. Hard candy.
6. Soft candy.
7. Baked goods and baking mixes.

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications be covered by the appended claims.

## Claims

1. A chewing gum composition comprising:
a water insoluble gum base;
a water soluble portion;
a syrup composed of a coevaporated sorbitol, mannitol, and glycerin solution that comprised prior to coevaporation from 52% to 72% by weight aqueous sorbitol; from 3% to 7% by weight mannitol, and from 25% to 45% by weight glycerin and a binding component composed of lycasin and glycerin.

2. The chewing gum composition of claim 1 wherein the syrup further comprises not more than 10% water.

3. The chewing gum composition of claim 1 wherein the syrup further comprises not more than 3% water.

4. The chewing gum composition of claim 1 further comprising a crystalline form of sorbitol.

5. The chewing gum composition of claim 1 wherein the chewing gum composition is sugar-free.

6. The chewing gum composition of claim 1 wherein the water insoluble gum base is wax-free.

7. The chewing gum composition of claim 1 wherein the syrup includes on a dry weight basis, not including any water that may be present:
40% to 70% by weight sorbitol;
24% to 56% by weight glycerin; and
4% to 9% by weight mannitol.

8. The chewing gum composition of claim 1 wherein the syrup includes on a dry weight basis, not including any water that may be present:
47% to 65% by weight sorbitol;
28% to 45% by weight glycerin; and
5 to 7% by weight mannitol.

9. The chewing gum composition of claim 1 further comprising an artificial sweetener.
